Europäisches Patentamt

European Patent Office

Office européen des brevets

(11) Veröffentlichungsnummer: **0 513 673 A2**

# EUROPÄISCHE PATENTANMELDUNG

(21) Anmeldenummer: **92107750.9**

(51) Int. Cl.⁵: **F16K 17/32**

(22) Anmeldetag: **08.05.92**

(30) Priorität: **18.05.91 DE 4116429**

(43) Veröffentlichungstag der Anmeldung:
**19.11.92 Patentblatt 92/47**

(84) Benannte Vertragsstaaten:
**CH DE FR GB IT LI**

(71) Anmelder: **FIRMA VSE VAKUUMTECHNIK GmbH**
**Zellgasse 43**
**A-6890 Lustenau(AT)**

(72) Erfinder: **Bösch, Hubert**
**Sandstrasse 29**
**A-6890 Lustenau(AT)**

(74) Vertreter: **Riebling, Peter, Dr.-Ing.,**
**Patentanwalt**
**Rennerle 10, Postfach 31 60**
**W-8990 Lindau/B.(DE)**

(54) **Schnell öffnendes oder schliessendes Ventil.**

(57) Ein schnell öffnendes oder schließendes Ventil besteht aus einem in einem Zylindergehäuse verschiebbar angetriebenen Kolben, der mindestens in Verschiebungsrichtung von einem im Zylinderraum bestehenden Druckpolster beaufschlagt ist und dessen Kolbenstange mit einem Verschlußorgan verbunden ist, welches die zu verschließende Leitung schnell öffnet oder schließt und wobei der Kolben im Zylindergehäuse durch eine Sperrvorrichtung in seiner gesperrten Stellung gehalten ist. Die Sperrvorrichtung ist als mechanische Verriegelung zwischen dem Kolben und dem Zylindergehäuse ausgebildet, die bevorzugt durch einen pneumatisch betätigbaren Ringkolben entsperrt werden kann.

EP 0 513 673 A2

Gegenstand der vorliegenden Erfindung ist ein schnell schließendes oder öffnendes Ventil nach dem Oberbegriff des Patentanspruchs 1. Derartige Ventile werden vor allem in der Vakuumtechnik angewendet, das Anwendungsgebiet der vorliegenden Erfindung bezieht sich aber nicht nur allein auf die Anwendung in der Vakuumtechnik, sondern auf alle, dem Fachmann geläufigen Anwendungsgebiete. Im übrigen bezieht sich das Anwendungsgebiet der vorliegenden Erfindung auch nicht auf die Ansteuerung des Ventils mit Luft, sondern das vorliegende Ventil kann auch mit Hydraulik oder anderen Steuermedien angesteuert und angetrieben werden.

Bei einem bekannten Schnellschluß-Ventil soll z. B. der Lufteinbruch in einem evakuierten, zu schützenden System verhindert werden.

Hierbei ist das System über eine Verbindungsleitung mit einem anderen System verbunden.

Wenn nun in dem anderen System ein Lufteinbruch stattfindet, dann ist in der Verbindungsleitung ein Schnellschluß-Ventil angeordnet, welches über eine Steuerelektronik den Lufteinbruch in dem einen System feststellt und den Zugang in der Verbindungsleitung zwischen dem einen System und dem zu schützenden Vakuum-System schlagartig schließt.

Hierbei ist es bekannt, daß für jede Millisekunde, welches das Ventil für den Schließvorgang braucht, 1 m Leitungslänge der Verbindungsleitung benötigt wird.

Das bekannte Schnellschluß-Ventil besteht im wesentlichen aus einer Kolben-Zylinder-Anordnung, wobei die Kolbenstange z. B. mit einem Klappenventil verbunden ist, welches Klappenventil schnell geöffnet bzw. geschlossen werden soll.

Der Kolben ist in dem Zylinder so angeordnet, daß an der einen Kolbenseite ein Druckpolster unter hohem Druck in Schließrichtung auf den Kolben lastet, und an der gegenüberliegenden Seite des Kolbens (auf der Kolbenstangenseite) ein entgegengerichtetes Polster vorhanden ist, dessen Druck größer ist als das erstgenannte Druckpolster. Damit wird der Kolben in einem stabilen Gleichgewicht gehalten und das Ventil wird in Öffnungsstellung vorgespannt. Sobald der Alarmfall eintritt und das Ventil blitzartig schließen soll, wird der an der Kolbenstangenseite des Kolbens angeordnete Druck schlagartig entfernt dadurch, daß dieses Druckpolster über eine Entlüftungsöffnung schlagartig ins Freie abgelassen wird.

Das an der gegenüberliegenden Kolbenseite angeordnete Druckpolster wirkt nun durch die plötzliche Entlastung des Kolbens schlagartig in Schließrichtung auf den Kolben, so daß das Ventil damit schnell geschlossen wird.

Bei einem derartigen Schnellschluß-Ventil ist die Schließgeschwindigkeit noch verbesserungsfähig. Die schlagartige Entlüftung des an der Kolbenstangenseite angeordneten Luftpolsters ins Freie ist relativ langsam, weil das gesamte Volumen des Luftpolsters über einen relativ engen Strömungsquerschnitt ins Freie geleitet werden muß. Bekannterweise kann über einen derartigen Strömungsquerschnitt - der als Meßquerschnitt wirkt - nur die Luft mit maximal Schallgeschwindigkeit ausgelassen werden, was zu einer erheblichen Zeitverzögerung beim Schließen dieses Ventiles führt.

Der vorliegenden Erfindung liegt deshalb die Aufgabe zugrunde, ein Schnellschluß-Ventil der eingangs genannten Art so weiterzubilden, daß der Schließvorgang noch wesentlich beschleunigt wird.

Zur Lösung der gestellten Aufgabe ist die Erfindung durch die technische Lehre des Anspruches 1 gekennzeichnet.

Wesentliches Merkmal der vorliegenden Erfindung ist, daß erfindungsgemäß zwar noch immer das zum schlagartigen Schließen notwendige hochgespannte Luftpolster beibehalten wird, daß aber anstelle des in Öffnungsrichtung des Kolbens an der Kolbenstangenseite bestehenden Luftpolsters nun eine mechanische Sperrung verwendet wird, so daß die Notwendigkeit entfällt, ein an dieser Stelle beim Stand der Technik vorhanden gewesenes Luftpolster zu entlüften.

Gemäß der vorliegenden Erfindung entfällt also das Luftpolster an der Kolbenstangenseite und stattdessen wird eine mechanisch schnell auslösbare Sperre vorgeschlagen, bei der derartige Entlüftungsprobleme - wie sie beim Stand der Technik bestehen - nicht vorhanden sind.

Der Einfachheit halber wird in der vorliegenden Beschreibung von einem Schnellschluß-Ventil mit pneumatischer Betätigung ausgegangen. Es liegt aber im Rahmen der vorliegenden Erfindung, dieses Ventil in analoger Weise als Schnellöffnungs-Ventil auszugestalten und ebenso liegt es im Rahmen der vorliegenden Erfindung und wird als erfinderisch beansprucht, dieses Ventil nicht mit Pneumatik sondern mit einem anderen Medium wie z. B. Hydrauliköl zu betreiben.

In einer bevorzugten Ausführungsform der vorliegenden Erfindung besteht die mechanische Sperrung zwischen dem Kolben und der zugeordneten Zylinderwandung aus in angehobener Stellung des Kolbens (d.h. in Öffnungsstellung des darunter angeordneten Ventils) einander gegenüberliegenden Ringnuten, wobei die eine Ringnut am Außenumfang des Kolbens angeordnet ist und die gegenüberliegende Ringnut am Innenumfang der zugeordneten Zylinderwandung. Die beiden einander gegenüberliegenden Ringnuten fluchten zueinander in der besagten angehobenen Stellung des Kolbens.

2

In den Bereich dieser beiden einander gegenüberliegenden Ringnuten greifen nun Kugeln ein, welche gleichmäßig verteilt am Umfang dieser Ringnuten angeordnet sind.

Die beiden Ringnuten im Kolben und in der gegenüberliegenden Zylinderwandung ergänzen sich zu einer geschlossenen Ringnut, in deren Bereich Kugeln radial verteilt am Umfang angeordnet sind.

In einer ersten Ausführungsform ist hierbei vorgesehen, daß die Kugeln dicht an dicht den gesamten Querschnitt der Ringnut über den Umfang der Ringnut gesehen ausfüllen, während in einer zweiten Ausführungsform vorgesehen ist, daß die Kugeln in einem Kugelkäfig gehalten werden und so einen gegenseitigen in Umfangsrichtung sich erstreckenden Abstand aufweisen.

Wichtig hierbei ist, daß die Kugeln so in den Spalt zwischen der Zylinderwandung und der zugeordneten Kolbenwandung bringbar sind, daß sie als Sperre wirken.

Hierbei ist vorgesehen, daß die in Schließrichtung wirksamen "Dach"-Flächen der Ringnut keilförmig ausgebildet sind, um dafür zu sorgen, daß in der einen Stellung, nämlich in der Schließstellung die Kugel genau in dem Ringspalt zwischen der Kolbenwandung und der zugeordneten Zylinderwandung liegt und die Kugel sich hierbei an keilförmigen Dachflächen der einander ergänzenden Ringnutenhälften zentriert.

Im Bereich der Zylinderwandung ist diese Ringnut jedoch nicht als feststehender Teil ausgebildet, sondern die Ringnut wird an ihrer Oberseite (Dachfläche) durch einen Ringkolben begrenzt, welcher Ringkolben parallel zur Bewegungsrichtung des Hauptkolbens unter Pneumatikdruck antreibbar ist.

Dieser Ringkolben wird von einem kleinvolumigen Luftpolster nach unten gepreßt, so daß die Ringnut damit definiert ist und die in der Ringnut lagernde Kugel in den Spalt zwischen dem Kolben und der Zylinderwandung gepreßt wird und so den Kolben an der Zylinderwandung mechanisch sperrt.

Sobald dieses kleinvolumige Luftpolster des Ringkolbens entlüftet wird drückt die keilförmige Dachfläche der Ringnuthälfte im Kolben die Kugel radial auswärts in die Ringnutenhälfte in der Zylinderwandung hinein, wodurch der Kolben sofort entsperrt ist und schlagartig durch das auf ihm lastende Druckpolster nach unten fährt und das Ventil hierbei schließt.

Der Vorteil der vorliegenden Erfindung liegt also darin, daß man auf ein an der Kolbenstangenseite des Kolbens angeordnetes Druckpolster verzichtet und stattdessen eine mechanische Sperrung vorsieht, wobei diese mechanische Sperrung pneumatisch entsperrt werden kann dadurch, daß ein nur kleinvolumiges Luftpolster schlagartig entlüftet wird, während beim Stand der Technik ein relativ großvolumiges Luftpolster entlüftet werden mußte.

In einer Weiterbildung der vorliegenden Erfindung ist es vorgesehen, daß der besagte Ringkolben nicht über ein Luftpolster in Längsrichtung des Hauptkolbens verschiebbar angetrieben ist, sondern das dieser Kolben über eine entsprechende Elektromagnetbetätigung in den beiden Hubrichtungen angetrieben ist.

Wenn der Ringkolben aus einem Stahlteil besteht, dann ist es vorgesehen, daß in der gegenüberliegenden Wandung des Zylinders entsprechend ansteuerbare Elektromagneten angeordnet sind, die den Kolben entweder in der einen oder in der anderen Richtung anheben oder wegschieben können. Hierdurch wird ebenfalls schlagartig diese Ringnut geöffnet und geschlossen und die in der Ringnut angeordneten Kugeln werden somit in die Ringnut radial auswärts befördert oder entsprechend radial einwärts zum Zwecke der Sperrung des Hauptkolbens.

Statt der hier beschriebenen Kugeln als Sperrelemente ist es in einer Weiterbildung der vorliegenden Erfindung vorgesehen, daß eine im Kreisring angeordnete Schraubenfeder in dieser Ringnut angeordnet ist, welche relativ dicht aneinanderliegende Federwindungen aufweist, wobei es bei dieser Federanordnung ebenfalls möglich ist, daß diese Feder radial auswärts durch die entsprechenden keilförmigen Dachflächen in der Ringnuthälfte im Kolben verdrängt wird und ebenso kann diese Feder radial einwärts durch den vorher beschriebenen Ringkolben in die Ringnut zum Zwecke der Sperrung des Hauptkolbens hineinverdrängt werden.

Statt der beschriebenen Kugeln oder der Schraubenfeder können auch noch andere Sperrelemente verwendet werden, wie z. B. Ovalkugeln oder zylinderförmige Rollen, welche den gleichen Zweck übernehmen.

In den nachfolgenden Zeichnungen wird dann im übrigen noch erläutert, daß der in Richtung der Schließstellung nach unten schlagartig sich bewegende Kolben noch durch eine Dämpfungsanordnung gedämpft wird, wobei diese Dämpfungsanordnung darin besteht, daß dieser Kolben an seiner Unterseite ringförmig ausgebildet ist und in einen ebensolchen abgedichteten ringförmigen Zylinderraum eintaucht, wo sich ein bremsendes Luftpolster beim Eintauchen bildet, welches über eine entsprechende Drosselbohrung dann nachfolgend langsam entlüftet werden kann.

Um den Kolben wieder in seine Ausgangsstellung (überwachungsstellung) zu bringen ist an der Kolbenstangenseite des Kolbens und der zugeordneten Zylinderwandung eine Feder angeordnet, die dafür sorgt, daß, wenn der Kolben in seiner Schließstellung war und das obere, den Kolben antreibende starke Luftpolster entfernt ist, daß der Kolben dann wieder in seine überwachungsstellung nach oben verschoben wird.

Ebenso ist es möglich, die Rückstellung des Kolbens nicht über eine Feder sondern pneumatisch zu bewerkstelligen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand einer lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Figur 1    zeigt schematisiert im Querschnitt ein Ventil nach der Erfindung.

Figur 2    zeigt eine schematisierte Darstellung einer anderen Ausführungsform als Ersatz für die Sperrkugeln.

In einem Zylindergehäuse 1 ist ein Kolben 2 in Pfeilrichtung 5 und in Gegenrichtung hierzu verschiebbar angeordnet, wobei die Verschiebung in Pfeilrichtung 5 dadurch erfolgt, daß in einem oberen Zylinderraum 3 ein Luftpolster angeordnet ist, dessen Druck einen weiten Bereich überspannen kann, z.B. 5 bis 100 bar.

Das Luftpolster wird durch das Steuerventil 23 gesteuert.

Auf der gegenüberliegenden Seite zum Kolben 2 ist ein weiterer Zylinderraum 4 (auf der Kolbenstangenseite) angeordnet, wobei in diesem Zylinderraum 4 Atmosphärendruck herrscht.

Der Kolben 2 ist mit einer Kolbenstange 6 verbunden, die über einen O-Ring 19 gegenüber dem Zylinderraum 3 abgedichtet ist, so daß von dem oberen Zylinderraum 3 kein Überdruck in den unteren Zylinderraum 4 abfließen kann.

Die Kolbenstange 6 ist bevorzugt werkstoffeinstückig mit einer Ventilstange 7 verbunden, die ihrerseits an ihrer Unterseite mit einer Schließblende 12 befestigt ist, welche in einem Schlitz 14 im Ventilgehäuse 33 verschiebbar angeordnet ist.

Der Schlitz 14 ist hierbei im Bereich einer Vakuumleitung 17 angeordnet, wobei diese Vakuumleitung schlagartig durch Verschließen mit der Schließblende 12 in Pfeilrichtung 5 geschlossen werden kannn.

Zur Dämpfung des letzten Verschiebungsweges des Kolbens 2 in Pfeilrichtung 5 ist eine Dämpfungsanordnung vorgesehen. Diese Dämpfungsanordnung besteht in der bevorzugten Ausführungsform aus einem Dämpfungskolben 10, der bevorzugt werkstoffeinstückig an der Unterseite des Kolbens 2 angeformt ist.

Sobald der Kolben über die später noch zu beschreibende, erfindungsgemässe Entsperranordnung schlagartig nach unten in Pfeilrichtung 5 bewegt wird, taucht der Dämpfungskolben 10 etwa auf halbem Verschiebungsweg des Kolbens 2 in einen Zylinderraum 11 ein und wird dort von einem O-Ring 18 abgedichtet. Der Zylinderraum 11 wird zur Atmosphäre hin durch eine Bohrung 31 verbunden, die steuerbar durch ein Drosselventil 30 verschlossen ist, welches gesteuert den Fluß über eine Bohrung 32 auslässt.

Entsprechend der Einschraubstellung des Drosselventils 30 kann somit die Dämpfung in Pfeilrichtung 5 fein eingestellt werden.

Gleichzeitig sorgt ein O-Ring 16 an der Unterseite des Zylinderraums 11 dafür, daß keine Luft von diesem Zylinderraum 11 in die darunterliegende Ausnehmung 9 gelangt. Die Ausnehmung 9 ist nämlich über eine Verbindungsöffnung 15 mit der Vakuumleitung 17 luftschlüssig verbunden.

Sobald der Kolben in seiner unteren Endstellung verschoben wurde, schließt die Schließblende 12 den Querschnitt der Vakuumleitung 17 schlagartig dichtend ab.

Die vorliegende Schließblende 12 muß jedoch nicht zwingend die Vakuumleitung 17 abdichtend schließen, denn es gibt Anwendungsfälle, wo es nur darauf ankommt, einen in der Vakuumleitung 17 vorhandenen Teilchenstrahl zu unterbrechen, wozu die Schließblende 12 ebenfalls geeignet ist.

Die Erfindung liegt nun darin, daß eine schlagartige Entsperrung des Kolbens 2 in Richtung seiner Schließstellung (Pfeilrichtung 5) durch die erfindungsgemässe Entsperreinrichtung erfolgen kann.

Die Entsperreinrichtung besteht im wesentlichen aus einem Ring von Sperrkugeln 20, die entweder dicht an dicht gleichmässig am Umfang verteilt im Bereich einer Ringnut 27 angeordnet sind oder die durch einen entsprechenden Kugelkäfig auf Abstand voneinander gehalten werden.

Wichtig hierbei ist, daß die obere Begrenzung der Ringnut 27 (in Gegenrichtung zur Pfeilrichtung 5) im Profil dachförmig ausgebildet ist und aus zwei einander ergänzenden Schrägen 26,28 besteht. Die eine Schräge 26 ist hierbei an der Unterseite eines Ringkolbens 21 angeordnet, während die andere Schräge 28 im Bereich der Ringnut 27 am Außenumfang des Kolbens 2 eingearbeitet ist.

Die Schrägen 26,28 müssen nicht symmetrisch zueinander angeordnet sein; wichtig ist nur, daß in der gezeichneten Sperrstellung die Schräge 26 des Ringkolbens 21 die Sperrkugeln 20 in die Ringnut 27 des

4

Kolbens 2 einpresst, wobei sich die Sperrkugeln 20 andererseits an einer Anschlagkante 34 im Bereich des Zylindergehäuses 1 anlegen.

Die Stellung des Kolbens 2 ist so, daß der untere Bereich der Ringnut 27 im Kolben 2 in diese Anschlagkante 34 einläuft, um ein gleichzeitiges Eingreifen der Sperrkugeln 20 einerseits in die Ringnut 27 und andererseits in eine Ausnehmung 35 im Zylindergehäuse 1 zu gewährleisten.

Damit wird eine sichere Sperrung des Kolbens 2 durch die dargestellten Sperrkugeln 20 in der eingezeichneten Stellung erreicht.

Zur schlagartigen Entsperrung schaltet das Steuerventil 22 um und lässt den im Zylinderraum 25 herrschenden Überdruck schlagartig nach außen über eine Verbindungsbohrung 24.

Hieraus ergeben sich die wesentlichen Vorteile der vorliegenden Erfindung, denn die Entlüftung des unter hohem Druck stehenden Zylinderraums 25 erfolgt schlagartig, wobei ein nur geringer Kolbenweg des Ringkolbens 21 erforderlich ist, um die Sperrkugeln 20 aus dem Bereich der Ringnut 27 herauszubringen und voll in die Ausnehmung 35 hinein zu befördern.

Nachdem die Sperrkugeln 20 dann nicht mehr in die Ringnut eingreifen, wird der Kolben 2 schlagartig durch das unter hohem Druck stehende Luftpolster im Zylinderraum 3 in Pfeilrichtung 5 nach unten bewegt, wodurch schlagartig die Schließblende 12 die Vakuumleitung 17 verschließt.

Die Abdichtung des Ringkolbens 21 im Bereich des Zylinderraums 25 erfolgt über O-Ringe 36.

Um den Ringkolben 21 montieren zu können, kann es vorgesehen sein, daß das Zylindergehäuse 1 zweiteilig ausgebildet ist.

Im übrigen wird das Ventilgehäuse 33 über Schrauben und entsprechende Abdichtungen an der Unterseite des Zylindergehäuses 1 angeschraubt.

Soll das Ventil wieder geöffnet werden, wird das Steuerventil 23 umgesteuert, so daß der Zylinderraum 3 zunächst entlüftet wird.

Die Gegenbewegung des Kolbens 2 in Gegenrichtung zur Pfeilrichtung 5 erfolgt durch die Kraft einer Feder 8, die sich einerseits am Boden des Zylinderraums 11 abstützt und andererseits an der Unterseite des Dämpfungskolbens 10.

Um die Sperrstellung wieder herzustellen, wird in der Hochposition des Kolbens gemäss der Abbildung wieder das Steuerventil 22 umgesteuert, so daß Luftdruck auf den Zylinderraum 25 gegeben wird und die Sperrkugeln aufgrund der an der Unterseite des Ringkolbens 21 angeordneten Schräge 26 wiederum in die Ringnut 27 hineinbewegt werden. Es kommt damit wieder zu der in der Abbildung gezeigten Sperrstellung. Es wird dann das Steuerventil 23 umgesteuert und der Zylinderraum 3 wird wieder mit Preßluft gefüllt.

Es wurde in der allgemeinen Beschreibung schon darauf hingewiesen, daß anstatt der hier beschriebenen pneumatischen Ansteuerung der Sperrkugeln 20 über den Ringkolben 21 auch eine elektromagnetische Ansteuerung möglich ist. Wichtig ist nur, daß über die Elektromagnetkraft ein ähnliches Element wie ein Ringkolben in Pfeilrichtung 5 und in Gegenrichtung hierzu bewegbar ist.

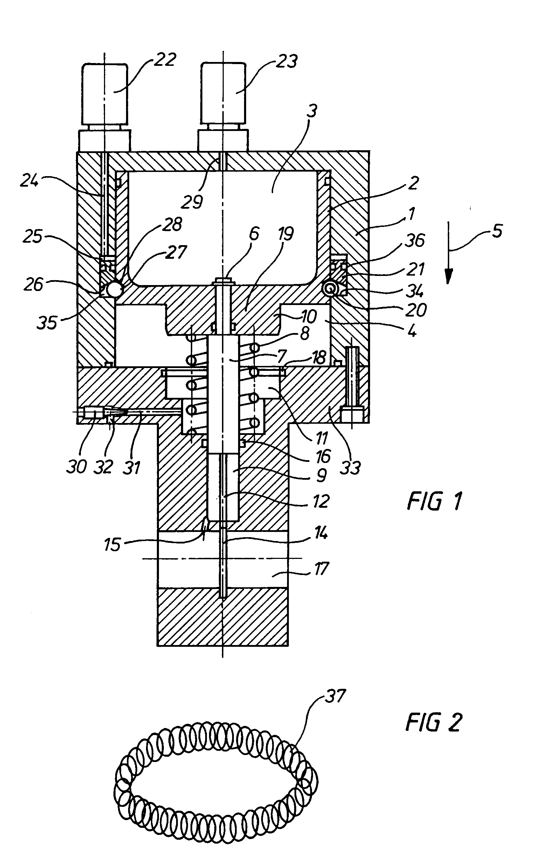

Die Figur 2 zeigt eine torusförmige Feder 37, die in der gleichen Weise wie die Sperrkugeln 20 in der Ringnut 27 angeordnet ist.

Auf diese torusförmige Feder - die unmittelbar den Ring aus Sperrkugeln 20 ersetzt - drückt der Ringkolben 21 in der oben beschriebenen Weise und erbringt ebenso eine Sperrstellung, wie oben beschrieben.

| ZEICHNUNGS-LEGENDE | |
|---|---|
| 1 Zylindergehäuse | 26 Schräge |
| 2 Kolben | 27 Ringnut |
| 3 Zylinderraum (oben) | 28 Schräge |
| 3 Zylinderraum (unten) | 29 Bohrung |
| 5 Pfeilrichtung | 30 Drosselventil |
| 6 Kolbenstange | 31 Bohrung |
| 7 Ventilstange | 32 Bohrung |
| 8 Feder | 33 Ventilgehäuse |
| 9 Ausnehmung | 34 Anschlagkante |
| 10 Dämpfungskolben | 35 Ausnehmung |
| 11 Zylinderraum | 36 O-Ringe |
| 12 Schließblende | 37 torusförmige Feder |
| 13 | |
| 14 Schlitz | |
| 15 Verbindungsöffnung | |
| 16 O-Ring | |
| 17 Vakuum-Leitung | |
| 18 O-Ring | |
| 19 O-Ring | |
| 20 Sperrkugel | |
| 21 Ringkolben | |
| 22 Steuerventil | |
| 23 Steuerventil | |
| 24 Verbindungsbohrung | |
| 25 Zylinderraum | |

**Patentansprüche**

1.  Schnell öffnendes oder schließendes Ventil mit Pneumatik- oder Hydraulik-Antrieb, bestehend aus einem in einem Zylindergehäuse verschiebbar angetriebenen Kolben, der mindestens in Verschiebungsrichtung von einem im Zylinderraum bestehenden Druckpolster beaufschlagt ist und dessen Kolbenstange mit einem Verschlußorgan verbunden ist, welches die zu verschließende Leitung schnell öffnet oder schließt, wobei der Kolben im Zylindergehäuse durch eine Sperrvorrichtung in seiner gespannten Stellung gehalten ist,
    **dadurch gekennzeichnet**, daß die Sperrvorrichtung als mechanische Verriegelung (20,37) zwischen dem Kolben (2) und dem Zylindergehäuse (1) ausgebildet ist.

2.  Ventil nach Anspruch 1, **dadurch gekennzeichnet**, daß die mechanische Verriegelung aus Sperrkugeln (20) besteht, die gleichmässig am Umfang verteilt in einer am Außenumfang des Kolbens (2) angeordneten, radial nach außen offenen Ringnut (27) angeordnet sind und in ihrer Sperrstellung gleichzeitig in eine der Ringnut (27) radial gegenüberliegende Ausnehmung (35) im Zylindergehäuse (2) eingreifen und sich gehäusefest abstützen.

3.  Ventil nach Anspruch 2, **dadurch gekennzeichnet**, daß die Sperrkugeln (20) kugelförmig ausgebildet sind.

4.  Ventil nach Anspruch 2, **dadurch gekennzeichnet**, daß die Sperrkugeln (20) zylinder- oder tonnenförmig ausgebildet sind.

5.  Ventil nach Anspruch 2, **dadurch gekennzeichnet**, daß die Sperrkugeln (20) durch eine torusförmige (Schrauben-) Feder (37) ersetzt sind.

6.  Ventil nach einem der Ansprüche 1 - 5,
    **dadurch gekennzeichnet,** daß die obere Begrenzung der Ringnut (27) durch zwei, im Winkel aufeinander stoßende Schrägen (26,28) gebildet ist, welche Schrägen die Sperrkugeln (20,37) in der Spaltmitte zwischen dem Kolben (1) und dem Zylindergehäuse (2) in Sperrstellung zentrieren, wobei die eine Schräge (26) durch die obere Wandung der Ringnut (27) im Kolben (2) und die andere Schräge (28) durch ein bewegbares Steuerelement gebildet ist.

7. Ventil nach Anspruch 6, **dadurch gekennzeichnet**, daß das Steuerelement als pneumatisch beaufschlagbarer Ringkolben (21) ausgebildet ist.

8. Ventil nach Anspruch 6, **dadurch gekennzeichnet**, daß das Steuermagnet als Ankerring ausgebildet ist, der durch eine im Zylindergehäuse (2) angeordnete Wicklung durch elektromagnetische Kraft anhebbar ist.

9. Ventil nach einem der Ansprüche 1 - 8, **dadurch gekennzeichnet**, daß an der Unterseite (Kolbenstangenseite) des Kolbens (2) ein Dämpfungskolben (10) angeordnet ist, der bei einer Verschiebung des Kolbens (2) in einen Zylinderraum (11) abgedichtet eintaucht, der über eine Drosselbohrung (30,31,32) zur Atmosphäre hin entlüftet ist.

10. Ventil nach einem der Ansprüche 1 - 9, **dadurch gekennzeichnet**, daß die Rückstellung des Kolbens (2) aus der abgesenkten Stellung in die angehobene, gesperrte Stellung durch eine Feder (8) erfolgt.

FIG 1

FIG 2